# FASCICULE DE BREVET EUROPEEN

(11) **EP 1 076 671 B1**
(45) Date de publication et mention de la délivrance du brevet: **04.06.2003**
(21) Numéro de dépôt: 99924835.4
(22) Date de dépôt: 28.04.1999
(51) Int. Cl.: C08G 63/672, C08G 63/676, C08G 63/64, A61K 9/00, A61K 9/16, A61K 47/34, A61K 47/48

(54) **POLYETHERESTER SEQUENCE NON-RETICULE, SA PREPARATION, ET SES UTILISATIONS**
UNVERNETZTER BLOCKPOLYETHERESTER, SEINE DARSTELLUNG UND SEINE VERWENDUNGEN
NON CROSS-LINKED BLOCK POLYETHERESTER, PREPARATION AND USES

(30) Priorité: 28.04.1998 FR 9805306
(43) Date de publication de la demande: 21.02.2001
(73) Titulaire: DEBIO RECHERCHE PHARMACEUTIQUE S.A., CH-1920 Martigny (CH)
(72) Inventeur: FERRUTI, Paolo, I-20133 Milan (IT); ORSOLINI, Piero, CH-1920 Martigny (CH)
(74) Mandataire: Touati, Catherine
(86) Numéro de dépôt international: EP9902891
(87) Numéro de publication internationale: WO99055760

(56) Documents cités:
- EP-A- 0 043 976
- EP-A- 0 812 868
- WO-A-92/22600
- WO-A-98/06439
- GB-A- 2 211 091
- M. NAGATA ET AL.: POLYMER INTERNATIONAL, vol. 42, 1997, pages 33-38, XP002090307
- A.-C. ALBERTSSON ET AL.: J. MACROMOL. SCI. - CHEM., vol. A23, no. 3, 1986, pages 411-422, XP002090308
- SUGGS, L. J. ET AL: "SYNTHESIS AND CHARACTERIZATION OF A BLOCK COPOLYMER CONSISTING OF POLY(PROPYLENE FUMARATE) AND POLY(ETHYLENE GLYCOL)" MACROMOLECULES, vol. 30, no. 15, 28 juillet 1997 (1997-07-28), pages 4318-4323, XP000657711
- CHEMICAL ABSTRACTS, vol. 125, no. 2, 8 juillet 1996 (1996-07-08) Columbus, Ohio, US; abstract no. 11795, XP002090309 & JP 08 059808 A (UNITIKA LTD.) 5 mars 1996 (1996-03-05)
- R. DUNCAN: ANTI-CANCER DRUGS, vol. 3, no. 3, juin 1992 (1992-06), pages 175-210, XP000430668 Oxford, GB
- NEUSE, E. W. ET AL: "CARRIER POLYMERS FOR CISPLATIN-TYPE ANTICANCER DRUG MODELS" POLYMERS FOR ADVANCED TECHNOLOGIES, vol. 7, no. 12, décembre 1996 (1996-12), pages 867-872, XP000635896

## Description

La présente invention concerne un polymère séquencé non réticulé.

Elle concerne également un procédé pour sa préparation ainsi que son utilisation notamment dans des compositions pharmaceutiques.

Le polymère séquencé selon l'invention contient des séquences de polyéthylène glycol liées à des séquences de polyester et/ou de polycarbonate. Les séquences de polyester sont choisies en particulier parmi des séquences de polyfumarate, polymaléate et polysuccinate.

Les séquences de polyester les plus avantageuses selon la présente invention sont les polyfumarates et les polysuccinates.

Les polysuccinates et polyfumarates ont été décrits dans la demande de brevet EP0043976, et ont déjà été testés pour leur utilisation dans des compositions pharmaceutiques mais ont été écartés à cause de leur nature fortement hydrophobe et leur faible biodégradabilité.

Néanmoins, la Société Demanderesse est parvenue à mettre au point des polymères contenant ces polyesters qui conviennent tout particulièrement à une utilisation dans des compositions pharmaceutiques.

La Société Demanderesse a en fait découvert que l'insertion des séquences hydrophiles de polymères de polyéthylène glycol dans les chaînes de polyfumarate, de polysuccinate et de polymaléate améliore la biocompatibilité de ces polymères tout en diminuant leur toxicité.

Le polymère séquencé selon la présente invention possède la formule générale (I) suivante :

-[Pa-(Pb-Pc)ₛ -Pa' - Pd - Pe]_{z}

dans laquelle :
- z = 1 à 20,
- s = 0 à 25,
- Pa représente :

   - [COA-COOB]-ₜ

   où :
   - t = 1 à 150, et
   - A représente CH=CH ou CH₂-CH₂
   - B représente (CH₂)ₙ - O - avec n = 1 à 8,
- Pb représente -[COO]ₓ- où x = 0 ou 1,
- Pd représente -[COO]_{y}- où y = 0 ou 1 ;
   à la condition que, lorsque s =0 ou x = 0 alors y = 1, et, lorsque y = 0 alors s ≠ 0 et x = 1 ;
- Pc et Pe représentent chacun indépendamment l'un de l'autre :

   [RO]ᵤ

   où :
   - u = 0 à 150, et
   - R représente un groupe alkylidène, cycloalkylidène, alcènylène, alcynylène ou arylidène, éventuellement substitué,
- Pa' représente

   - [COA-COOB']-_{t'}

   où
   A a la même signification que ci-dessus
   B représente (CH₂)_{n'}O, avec n'=0 à 8
      ou [RO]ᵤ avec R et u étant tels que définis ci-dessus.
   et t' = 0 à 150 ;
à la condition que lorsque s= 0, t'= 0, x= 0 et u= 0 alors B ne représente pas (CH₂)₄O si A est CH₂CH₂.

La masse moléculaire moyenne en poids du polymère est comprise entre 2.000 et 300.000 daltons.

Les séquences de polyéthylène glycol (PEG) introduites dans les polymères selon la présente invention peuvent être liées soit directement aux polyesters soit par l'intermédiaire de liaisons polycarbonates.

L'avantage de l'introduction des PEG par l'intermédiaire de liaisons polycarbonates réside dans le fait que la dégradation des polymères peut être modifiée selon le nombre et la longueur des séquences polycarbonates introduites dans le polymère.

La présence des séquences polycarbonates a pour effet de retarder la vitesse de dégradation.

Ainsi, les polymères selon l'invention permettent une grande souplesse dans le choix de leur biodégradabilité et de leur hydrophilicité. En effet, on peut moduler la biodégradabilité et l'hydrophilicité du polymère en modifiant :
- le nombre de séquences polycarbonates et le nombre de séquences PEG dans chaque motif du polymère,
- la longueur des séquences hydrophobes et hydrophiles dans chaque motif du polymère,
- la longueur du polymère.

La présence du PEG hydrophile augmente la solubilité aqueuse du polymère tout en diminuant son immunogénicité. De plus, l'introduction des séquences PEG, telle que décrite par M. NAGATA et al. dans Polymer International, Vol. 42, permet une meilleure biodégradabilité des polyfumarates et polysuccinates. En effet, pour un même poids de polymère, la biodégradabilité est supérieure en présence du PEG.

Les polymères selon la présente invention peuvent posséder un poids moléculaire très élevé, à partir de 20.000 daltons, tout en restant solubles et biodégradables. Ces polymères de haut poids moléculaires peuvent se concentrer au niveau des tumeurs en ciblant les cellules tumorales par un effet connu sous le nom "Enhanced Permeability Retention Effect" (EPR). En effet, les parois vasculaires des cellules tumorales sont plus perméables aux macromolécules que les parois des cellules vasculaires saines.

La proportion des séquences PEG dans le polymère permet également de préparer des polymères solubles ou non, qui peuvent être utilisés en tant que supports pour des principes actifs dans des compositions pharmaceutiques ou pour des antigènes dans des vaccins. Ces polymères peuvent donc être utilisés dans la formation des implants, microsphères, microparticules ou nanoparticules en association avec des principes actifs. Les nanoparticules seront composées des polymères à biodégradabilité supérieure afin d'obtenir une libération plus rapide du principe actif. Les implants, microsphères, ou microparticules permettront une libération contrôlée des principes actifs.

Les polymères selon l'invention peuvent également être conjugués avec un principe actif. A titre d'exemples, ces principes actifs peuvent être choisis parmi les anti-inflammatoires, les antitumoraux, les immunodépresseurs, les antithrombotiques, les neuroleptiques, les antidépresseurs, les antihypertenseurs, les peptides, les protéines, en particulier les cytokines, les nucléotides, ou un sel non toxique de ces substances.

Selon un mode préférentiel de réalisation du polymère conjugué selon la présente invention, un polymère contenant une séquence polyfumarate (A égale CH=CH) peut être couplé directement ou via un bras polymérique ou peptidique à un principe actif, par une liaison covalente. A titre d'exemples de principes actifs, on peut citer des agents antitumoraux tels que le taxol, les cis-platines et les doxorubicines.

L'invention concerne également un procédé pour la préparation des polymères séquencés de formule générale (I). Ce procédé est caractérisé par le fait que l'on polymérise des séquences de polyesters avec des séquences de polyéthylène glycol et qu'optionnellement l'on introduit des séquences de polycarbonates dans le polymère.

Selon un mode préférentiel de réalisation du procédé selon l'invention, on prépare des séquences de polyesters par polycondensation d'acide dicarboxylique avec des diols. L'introduction des séquences carbonates peut se faire de la façon suivante : on transforme les groupements hydroxyles terminaux d'un monomère ou d'un oligomère à terminaison bis-hydroxy en un dérivé activé par réaction avec un composé de formule :

X - CO - X

où X représente Cl ou imidazole.

Ces dérivés activés réagissent avec des composés hydroxylés afin d'obtenir des groupements carbonates.

En utilisant les réactifs en quantité stoechiométrique, il est possible d'obtenir des polymères de haut poids moléculaire. A cet effet, il est important d'avoir une bonne équivalence entre les terminaisons COX de l'oligomère activé et les terminaisons OH des diols. En effet, pour des polycondensations, ( en supposant que le rendement de la réaction est de 100 %), la masse moléculaire en poids est donnée par l'équation :

Xₙ = (1+r) / (1-r)

avec = Xₙ est le degré moyen de polymérisation et r le rapport des groupes fonctionnels complémentaires durant la réaction.

L'invention concerne en outre l'utilisation d'un polymère séquencé de formule générale (I) dans des compositions pharmaceutiques. Cependant, ces polymères ne sont pas limités à une telle utilisation. Ils peuvent être utilisés dans tous les domaines nécessitant une biodégradabilité contrôlée, par exemple dans l'agriculture.

L'invention sera mieux comprise à l'aide des exemples non limitatifs qui suivent.

### EXEMPLE 1 :

### Préparation d'un polymère séquencé monocarbonate.

On prépare un mélange de 0,34 ml (1,96 mmole) d'éthyle diisopropylamine et de 1,97 g (0,98 mmole) d'un polyéthylène glycol ayant un poids moléculaire d'environ 2000 Daltons (PEG 2000) dans 4 ml de chloroforme. On ajoute ce mélange goutte à goutte à une solution de 20% de COCl₂ (phosgène) dans du toluène (2,4 ml, 4,91 mmole), maintenue dans un bain de refroidissement à 0° C sous azote. 15 minutes après l'ajout du COCl₂, on élimine le COCl₂ restant à l'aide d'un flux d'azote pendant 30 minutes.

On agite la solution à l'aide d'un agitateur magnétique et on permet à la solution d'atteindre une température de 5°C.

A ce mélange réactionnel, on ajoute goutte à goutte une solution de PBS 3920 (3,85 g, 0,98 mmole), d'éthyl diisopropyl amine (0,34 ml, 1,96 mmole) et diméthylaminopyridine (0,12 g, 0,88 mmole) dans 21 ml de chloroforme.

On sort le mélange réactionnel du bain de refroidissement et on agite la solution pendant 12 heures. On évapore les solvants organiques et on sèche le produit sous vide.

Le polymère obtenu possède une viscosité intrinsèque dans le chloroforme à 30°C de 0,26 dl/g. Il contient 33,7% en poids de PEG. Il présente la formule générale (I) ci-dessus dans laquelle : Pa = -[COA-COOB]-avec, A = CH₂-CH₂, t=23, B = (CH₂)₄O, s=1, Pb = COO, Pc = [RO]ᵤ avec R = CH₂-CH₂ et u = 45,5 et z= environ 5.

### Exemple 2 :

### Préparation d'un polymère séquencé monocarbonate.

On maintient une solution de 2 g de PBS 3920 (0,51 mmole), 180 mg (0,55 mmole) de carbonyl diimidazole et 2g (0,5 mmole) de PEG 4000 sous azote à une température de 60°C dans 15 ml de chloroforme pendant 6 jours.

On obtient le polymère par précipitation dans de l'éther.

La viscosité intrinsèque dans le chloroforme à 30°C du polymère obtenu est de 0,32 dl/g. Le polymère contient 50% en poids de PEG. Il présente la formule générale (I) ci-dessus dans laquelle : Pa = [COA-COOB]ₜ avec, A=CH₂-CH₂, t=23, B₂(CH₂)₄O, s=1, Pb=COO, Pc = [RO]₄ avec R = CH₂ CH₂ et u=91, et z=environ 4.

### Exemple 3 :

### Préparation d'un polymère séquencé monocarbonate

On maintient une solution de 1g de PBS 10,034 (0,51 mmole), 129 mg (0,39 mmole) de carbonyl diimidazole et 0,39 g (0,09616 mmole) de PEG 4000 à 60°C dans 15 ml de chloroforme pendant 6 jours.

On obtient le produit par précipitation dans de l'éther.

La viscosité intrinsèque dans du chloroforme à 30°C est de 0,36 dl/g. Le polymère contient 36,7% en poids de PEG. Il présente la formule générale (I) ci-dessus dans laquelle : Pa = [COA-COOB]ₜ avec A=CH₂-CH₂, t=59, B = (CH₂)₄-O, Pb = [COO], Pc = [RO]ᵤ avec R = CH₂CH₂ et u = 91 et z = environ 2.

### Exemple 4 :

### Préparation d'un polyester

On agite 4,7 g (48 mmoles) d'anhydride maléique, 4,1 ml (46 mmoles) de butanediol et 8 g de PEG 4000 (2 mmoles) sous azote à une température de 200°C pendant 24 h. On fait barboter de l'azote dans la solution afin d'éliminer l'eau. On refroidit le produit sous vide et on le récupère.

Le polymère ainsi obtenu possède une viscosité intrinsèque dans le chloroforme à 30°C de 0,38 dl/g. Il contient 52% en poids de PEG. Il présente la formule générale 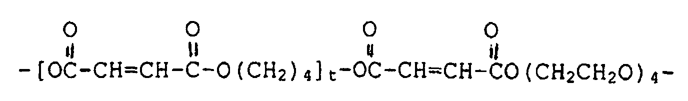 c'est-à-dire la formule générale (I) ci-dessus est la suivante : Pa-Pa' avec Pa=[COA-COOB]ₜ
où
A= CH=CH,
B= (CH₂)ₙO où n=4
t=47
Pa'=[COA-COOB']_{t'} où
A= CH=CH,
B'= (CH₂-CH₂)O
t' =47

### Exemple 5 :

### Préparation d'un polyester

On agite 34,9 g (0,3 mole) d'acide fumarique, 21,03 ml (0,231 mole) de butanediol, et 48 g (0,08 mole) de PEG 600 sous azote à une température de 200°C pendant 24 heures. On fait barboter de l'azote dans la solution afin d'éliminer l'eau. On refroidit le produit sous vide et on le récupère.

Le polymère ainsi obtenu possède une viscosité intrinsèque dans le chloroforme à 30°C de 0,23 dl/g. Il contient 54% en poids de PEG. Il présente une formule générale identique à celle de l'exemple 4.

### Exemple 6 :

### Préparation d'un polymère à partir d'un monoesterdiol

On ajoute 45,31 ml (504,8 mmoles) de butanediol à 5 g (50,48 mmoles) d'anhydride maléique. On agite la solution à une température de 180°C sous azote pendant 5 h. Ensuite, l'excès de butanediol est distillé sous vide (0,1 tor) et le résidu huileux est récupéré par dissolution dans du chloroforme, extraction à l'aide de bicarbonate de sodium,et de 0,1 mole d'acide chlorhydrique. Le résidu est séché sur du sulfate de sodium, évaporé sous vide à siccité, et maintenu sous vide élevé, (0,05 tor) jusqu'à ce que l'on obtienne un poids constant. Le rendement est de 80%.

Le spectre RMN du produit montre la structure suivante :

HO-CH₂-CH₂-CH₂-CH₂-OOC-CH=CH-COO-CH₂-CH₂-CH₂-CH₂-OH

### Exemple 7 :

### Préparation d'un polymère à motif bicarbonate

On mélange 0,34 ml (1,96 mmole) d'éthyldiisopropyl amine, et 0,588 g (0,98 mmole) de PEG 600 dans 4 ml de chloroforme. On ajoute ce mélange goutte à goutte à une solution de 20% de COCl₂ (phosgène) dans du toluène (2,4 ml, 4,91 mmole) refroidie à une température de 0°C sous azote. 15 minutes après l'ajout, on élimine l'excès de COCl₂ à l'aide d'un flux d'azote pendant 30 minutes.

On ajoute goutte à goutte la solution ainsi obtenue à une solution de 0,254 g(0,98 mmole) du diester obtenu à l'exemple précédent, 0,34 ml (1,96 mmole) d'éthyldiisopropylamine et 0,12 g (0,98 mmole) de diméthylaminopyridine dans 21 ml de chloroforme refroidi à 15°C dans un bain de refroidissement. La solution ainsi obtenue est agitée sous azote pendant 3 heures puis diluée avec 5 volumes de chloroforme. La solution est purifiée par extraction avec du bicarbonate de sodium et 0,01 mole d'acide chlorhydrique.

Ensuite, on sèche sur du sulfate de sodium, et on évapore sous vide à siccité et on maintient sous vide élevé (0,05 tor) jusqu'à ce que l'on obtienne un poids constant.

Le polymère ainsi obtenu possède une viscosité intrinsèque dans le chloroforme à 30°C de 0,90 dl/g. Il contient 70% en poids de PEG. Le produit est soluble dans le chloroforme et dans l'eau. Il présente la formule (I) ci-dessus dans laquelle :
Pa=[COA COOB] où A: CH=CH, B: (CH₂)₄-O, t=1, s=1
Pb= COO
Pc= [RO]ᵤ où u=13,6 R= CH₂-CH₂
Pd= COO
Pe= (CH₂)₄O
z= environ 100

### Exemple 8 :

### a) Synthèse de PBS à terminaison bis-hydroxy

On prépare une solution de 1,4-butanediol (29,74g, 0,33mol) dans du CHCl₃ exempt d'alcool (stabilisé par de l'amylène) et on sèche sur CaH₂. Après décantation de la solution, on verse goutte à goutte, sous agitation, dans cette solution, 43,98g (0,30 mol) de chlorure de succinyle (récemment distillé).

Le mélange réactionnel a alors été maintenu à 0-5°C dans un bain de glace. Pendant la réaction, on a fait barboter du N₂ dans le mélange pour retirer le HCl formé. Lorsque l'addition a été terminée, on a chauffé le mélange à 60°C jusqu'à ce qu'il n'y ait plus de HCl dans les effluents de N₂.

On a échantillonné une petite quantité du mélange réactionnel (5ml), dilué par CHCl₃ (4 volumes), extrait par une solution saturée de NaHCO₃ puis par de l'eau distillée. Enfin, on a séché la phase organique sur Na₂SO₄ anhydre. On a récupéré le produit par évaporation de la majeure partie du solvant sous pression réduite et par précipitation avec Et₂O.

Le produit a été caractérisé par son spectre RMN et par analyse chromatographique.

Les résultats montrent un PBS à terminaison bis-hydroxy de masse moyenne en nombre de 2000.
b) On a mélangé le résidu réactionnel avec une solution PEG 2000 (70g), dans CHCl₃ (stabilisé par de l'amylène) (130ml) préalablement séché sur CaH₂, on a divisé le mélange en 2 parties égales. On a traité avec de la N-éthyldiisopropylamine (29g, 0,224mol) la 1^{ère} partie de la solution et on a ajouté goutte à goutte une solution de phosgène (à 20% dans le toluène) (17,84ml, 0,28mol). On a maintenu le mélange entre 0 - 5°C dans un bain de glace et sous atmosphère de N₂. On a retiré l'excès de phosgène par bullage de N₂ pendant 30 minutes, 15 minutes après la fin de l'addition. On a traité la 2^{ème} partie de la solution avec de la N-éthyldiisopropylamine (29g, 0,224mol) et de la 4-diméthylaminopyridine (12,22g, 0,1mol). On a ajouté goutte à goutte la 1^{ère} partie de la solution, traitée par le phosgène, à la 2^{ème} partie de la solution, sous agitation et sous atmosphère d'azote, en maintenant la température entre 0-5°C dans un bain de glace. On a isolé le produit en utilisant la procédure de l'exemple 8. On a caractérisé le polymère obtenu (115g, 86,7%) par viscosité intrinsèque (0,86dl/g dans CHCl₃ à 30°C) et par spectre RMN, ce polymère comprend 60 % de PEG, ayant une structure représentée par la formule I dans laquelle
Pa= [COA-COOB]ₜ avec
A= CH₂ CH₂
B= -(CH₂)₄-O-
t= 22
Pb= -COO s= 1
Pc= -[RO]ᵤ- avec
R= CH₂ CH₂
u= 45,5
Pd= -COO
Pe= -(CH₂)₄-O-
z= environ 30

### Exemple 9:

On a suivi le mode opératoire de l'exemple 9, dans lequel on a utilisé 43,22g (0,30mol) de chlorure de fumaryle à la place du chlorure de succinyle. On a caractérisé le polymère obtenu (110g, 83%) par viscosité intrinsèque (0,98dl/g dans CHCl₃ à 30°c) et par spectre RMN, ce polymère comprend 51 % de résidu de PEG, et a une structure représentée par la formule I dans laquelle :
Pa= [COA-COOB]ₜ où
A: CH=CH
B= -(CH₂)₄-O-
t= 22
s= 1
Pb= COO
Pc= [RO]ᵤ avec R=CH₂ CH₂ et u= 45
Pd= COO
Pe= -(CH₂)₄-O-
z= environ 40

### Exemple 10

On a préparé, isolé et caractérisé une solution de PBS à terminaison bis-hydroxy comme dans l'exemple 10 a). Puis, comme dans l'exemple 8, en utilisant 0,588g de PEG 600 dans CHCl₃ (stabilisé par de l'amylène) préalablement séché sur CaH₂ à la place de 1,96g (0,98mol) de PEG 2000 et 1,96g (0,98mol) de PBS à terminaison bis-hydroxy à la place de 2,54g de diester, on a obtenu 0,32g (81%) d'un polymère ayant une viscosité intrinsèque de 0,64dl/g (dans CHCl₃ à 30°C) et présentant 60% de résidu PEG avec une structure selon la formule I dans laquelle
Pa= -[COA COOB]ₜ où
A= CH₂CH₂
B= -(CH₂)₄-O-
t= 22
s= 1
Pb= [COO]
Pc= [RO]ᵤ où R= CH₂CH₂
Pd= [COO] u= 45,5
Pe= (CH₂)₄-O- z= environ 30

## Revendications

1. Produit contenant un polymère en association avec un principe actif, ledit polymère séquencé non réticulé présentant la formule générale (I)
[-Pa-(Pb-Pc)ₛ-Pa'-Pd-Pe]_{z} (I)
dans laquelle :
- z = 1 à 20,
- s = 0 à 25
- Pa représente
- [COA-COOB]ₜ-
où :
- t = 1 à 150, et
- A représente CH=CH ou CH₂-CH₂
- B représente (CH₂)ₙ-O- avec n = 1 à 8
- Pb représente -[COO]ₓ- où x = 0 ou 1,
- Pd représente -[COO]_{y}- où y = 0 ou 1
à la condition que lorsque s =0 ou x = 0 alors y = 1, et lorsque y = 0 alors s ≠ 0 et x = 1 ;
- Pc et Pe représentent chacun indépendamment l'un de l'autre :
[RO]ᵤ
où :
- u = 0 à 150, et
R représente un groupe alkylidène, cycloalkylidène, alcènylène, alcynylène ou arylidène, éventuellement substitué,
Pa' représente -[COA COOB']_{t^{'}}
où
A a la même signification que ci-dessus,
B' représente (CH₂)_{n'}O avec n' = 0 à 8 ou [RO]ᵤ, R et u ayant les mêmes significations que ci-dessus.
et t'= 0 à 150,
à la condition que lorsque s= 0, t'= 0, x= 0 et u= 0 alors B ne représente pas (CH₂)₄-O si A est CH₂-CH₂,
la masse moléculaire moyenne en poids du polymère étant comprise entre 2.000 et 300.000 daltons.

2. Produit contenant un polymère séquencé et un principe actif, selon lequel le polymère séquencé est non réticulé et présente la formule générale (I)
[-Pa-(Pb-Pc)ₛ-Pa'-Pd-Pe]_{z} (I)
dans laquelle :
- z = 1 à 20,
- s = 0 à 25
- Pa représente
- [COA-COOB]ₜ-
où :
- t = 1 à 150, et
- A représente CH=CH ou CH₂-CH₂
- B représente (CH₂)ₙ-O- avec n = 1 à 8
- Pb représente -[COO]ₓ- où x = 0 ou 1,
- Pd représente -[COO]_{y}- où y = 0 ou 1
à la condition que lorsque s =0 ou x = 0 alors y = 1, et lorsque y = 0 alors s ≠ 0 et x = 1 ;
- Pc et Pe représentent chacun indépendamment l'un de l'autre :
[RO]ᵤ
où :
- u = 0 à 150, et
R représente un groupe alkylidène, cycloalkylidène, alcènylène, alcynylène ou arylidène, éventuellement substitué,
Pa' représente -[COA COOB']_{t^{'}}
où
A a la même signification que ci-dessus,
B' représente (CH₂)_{n'}O avec n' = 0 à 8 ou [RO]ᵤ, R et u ayant les mêmes significations que ci-dessus.
et t'= 0 à 150,
à la condition que lorsque s= 0, t'= 0, x= 0 et u= 0 alors B ne représente pas (CH₂)₄-O si A est CH₂-CH₂,
la masse moléculaire moyenne en poids du polymère étant comprise entre 2.000 et 300.000 daltons,
ledit polymère contient une séquence polyfumarate et est couplé par une liaison covalente à un principe actif.

3. Produit selon la revendication 2, **caractérisé par le fait que** le polymère séquencé est lié directement ou via un bras polymérique ou peptidique à un principe actif.

4. Produit selon l'une des revendications 1 à 3, **caractérisé par le fait que** le polymère séquencé contient des séquences de polyethylène glycol liées à des séquences de polyester et/ou de polycarbonate.

5. Produit selon la revendication 4, **caractérisé par le fait que** les séquences de polyester sont choisies parmi des séquences de polyfumarate et polysuccinate.

6. Procédé pour la préparation d'un produit selon l'une des revendications 1 à 5, **caractérisé par le fait que** l'on polymérise des séquences de polyesters avec des séquences de polyéthylène glycol, que l'on introduit des groupes carbonates dans le polymère et que l'on ajoute un principe actif.

7. Procédé selon la revendication 6, **caractérisé par le fait que** l'on prépare les séquences de polyesters par polycondensation d'acide dicarboxylique avec des diols.

8. Procédé selon la revendication 6 ou 7, **caractérisé par le fait que** l'on introduit les groupes carbonates en transformant les groupements hydroxyles terminaux d'un monomère ou d'un oligomère à terminaison bis-hydroxy en un dérivé activé par réaction avec un composé de formule 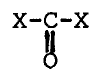 où X représente Cl ou imidazole et par réaction de ces dérivés activés avec des composés hydroxylés.

9. Utilisation d'un produit selon l'une des revendications 1 à 5 pour la préparation de compositions pharmaceutiques.

10. Utilisation d'un produit selon l'une des revendications 1 à 5, pour la préparation de nanoparticules.

11. Utilisation d'un produit selon l'une des revendications 1 à 5, pour la préparation d'implants, de microsphères, ou de microparticules permettant la libération contrôlée du principe actif.

## Patentansprüche

1. Produkt, enthaltend ein Polymer zusammen mit einem Wirkprinzip, wobei das genannte unvernetzte Block-Polymer die allgemeine Formel (I) aufweist:
**[-Pa-(Pb-Pc)**_{**s**}**-Pa'-Pd-Pe]**_{**z**} (I),
worin gilt:
- z ist 1 bis 20,
- s ist 0 bis 25,
- Pa stellt -[COA-COOB]ₜ- dar,
worin:
- t = 1 bis 150 und
- A CH=CH oder CH₂-CH₂ und
- B (CH₂)ₙ-O- mit n = 1 bis 8 darstellen,
- Pb stellt -[COO]ₓ- dar, worin x = 0 oder 1,
- Pd stellt -[COO]_{y}- dar, worin y = 0 oder 1, mit der Maßgabe, dass, wenn s = 0 oder x = 0, dann y = 1, und wenn y = 0, dann s ≠ 0 und x = 1,
- Pc und Pe stellen, jeweils unabhängig voneinander, dar:
[RO]ᵤ,
worin
- u = 0 bis 150 und
R eine Alkyliden-, Cycloalkyliden-, Alkenylen-, Alkinylen- oder eine gegebenenfalls substituierte Arylidengruppe darstellt,
- Pa' stellt -[COA-COOB']_{t^{'}} dar,
worin A die gleiche Bedeutung wie oben hat,
B' (CH₂)_{n'}O mit n' = 0 bis 8
oder [RO]ᵤ darstellt, worin R und u die gleichen Bedeutungen wie oben haben, und
t' = 0 bis 150,
mit der Maßgabe, dass, wenn s = 0, t' = 0, x = 0 und u = 0, dann stellt B nicht (CH₂)₄-O dar, wenn A CH₂-CH₂ ist,
wobei die mittlere Molekulargewichtsmasse des Polymers 2000 bis 300000 Daltons beträgt.

2. Produkt, enthaltend ein Block-Polymer und ein Wirkprinzip, wobei das Block-Polymer unvernetzt ist und die allgemeine Formel (I) aufweist:
**[-Pa-(Pb-Pc)**_{**s**}**-Pa'-Pd-Pe]**_{**z**} (I),
worin gilt:
- z ist 1 bis 20,
- s ist 0 bis 25,
- Pa stellt -[COA-COOB]ₜ- dar,
worin:
- t = 1 bis 150 und
- A CH=CH oder CH₂-CH₂ und
- B (CH₂)ₙ-O- mit n = 1 bis 8 darstellen,
- Pb stellt -[COO]ₓ- dar, worin x = 0 oder 1,
- Pd stellt -[COO]_{y}- dar, worin y = 0 oder 1,
mit der Maßgabe, dass, wenn s = 0 oder x = 0, dann y = 1, und wenn y = 0, dann s ≠ 0 und x = 1,
- Pc und Pe stellen, jeweils unabhängig voneinander, dar:
[RO]ᵤ,
worin
- u = 0 bis 150 und
R eine Alkyliden-, Cycloalkyliden-, Alkenylen-, Alkinylen- oder eine gegebenenfalls substituierte Arylidengruppe darstellt,
- Pa' stellt -[COA-COOB']_{t^{'}} dar,
worin A die gleiche Bedeutung wie oben hat,
B' (CH₂)_{n'}O mit n' = 0 bis 8
oder [RO]ᵤ darstellt, worin R und u die gleichen Bedeutungen wie oben haben, und
t' = 0 bis 150,
mit der Maßgabe, dass, wenn s = 0, t' = 0, x = 0 und u = 0, dann stellt B nicht (CH₂)₄-O dar, wenn A CH₂-CH₂ ist,
wobei die mittlere Molekulargewichtsmasse des Polymers 2000 bis 300000 Daltons beträgt,
wobei das genannte Polymer einen Polyfumarat-Block enthält und über eine kovalente Bindung an ein Wirkprinzip gekuppelt ist.

3. Produkt gemäß Anspruch 2, **dadurch gekennzeichnet, dass** das Block-Polymer direkt oder über einen polymeren oder peptidischen Arm an das Wirkprinzip gebunden ist.

4. Produkt gemäß einem der Ansprüche 1 bis 3, **dadurch gekennzeichnet, dass** das Block-Polymer Polyethylenglycol-Blöcke enthält, die an Polyester- und/oder Polycarbonat-Blöcke gebunden sind.

5. Produkt gemäß Anspruch 4, **dadurch gekennzeichnet, dass** die Polyester-Blöcke aus Polyfumarat und Polysuccinat-Blöcke ausgewählt sind.

6. Verfahren zur Herstellung eines Produkts gemäß einem der Ansprüche 1 bis 5, **dadurch gekennzeichnet, dass** man Polyester-Sequenzen mit Polyethylenglycol-Blöcke polymerisiert, die man über Carbonatgruppen in das Polymer einführt, und man ein Wirkprinzip zugibt.

7. Verfahren gemäß Anspruch 6, **dadurch gekennzeichnet, dass** man die Polyester-Blöcke durch Polykondensation von Dicarbonsäuren mit Diolen herstellt.

8. Verfahren gemäß Anspruch 6 oder 7, **dadurch gekennzeichnet, dass** man die Carbonatgruppen einführt, indem man die endständigen Hydroxylgruppierungen eines Mono- oder Olygomers mit Bishydroxy-Enden zu einem aktivierten Derivat durch Reaktion mit einer Verbindung der Formel:
**X-C(O)-X,**
worin X Cl oder Imidazol darstellt, und durch Reaktion dieser aktivierten Derivate mit Hydroxylverbindungen umsetzt.

9. Verwendung eines Produkts gemäß einem der Ansprüche 1 bis 5 zur Herstellung pharmazeutischer Zusammensetzungen.

10. Verwendung eines Produkts gemäß einem der Ansprüche 1 bis 5 zur Herstellung von Nanopartikeln.

11. Verwendung eines Produkts gemäß einem der Ansprüche 1 bis 5 zur Herstellung von Implantaten, Mikrokugeln oder von Mikropartikeln, welche die gesteuerte Freisetzung des Wirkprinzips ermöglichen.

## Claims

1. Product containing a polymer associated with an active substance, said non crosslinked block polymer having the general formula (I)
- [Pa- (Pb-Pc)ₛ-Pa'-Pd-Pe]_{z}
wherein:
- z = 1 to 20,
- s = 0 to 25,
- Pa represents:
- [COA-COOB]ₜ-
where:
- t = 1 to 150, and
- A represents CH=CH or CH₂-CH₂
- B represents (CH₂)ₙ -O- where n = 1 to 8,
Pb represents -[COO]-ₓ where x = 0 or 1,
Pd represents:
- [COO]_{y}-
where y = 0 or 1
provided that if s = 0 or x = 0 then y = 1, and if y = 0 then s ≠ 0 and x = 1;
- Pc and Pe, each independently of one another, represent:
[RO]ᵤ
where:
- u = 0 to 150, and
- R represents an alkylidene, cycloalkylidene, alkenylene, alkynylene or arylidene group, optionally substituted,
Pa' represents - [COA-COOB']-_{t'}
where A has the same meaning as above B' represents (CH₂)_{n'}O, where n' = 0 to 8 or [RO]ᵤ , R and u having the same meanings as above,
and t' = 0 to 150,
provided that if s = 0, t' = 0, x = 0 and u = 0 then B does not represent (CH₂)₄O if A is CH₂CH₂,
the weight-average molecular mass of the polymer being between 2,000 daltons and 300,000 daltons.

2. Product containing a block polymer and an active substance wherein the block polymer is non crosslinked and has the general formula (I)
-[Pa-(Pb-Pc)ₛ-Pa'-Pd-Pe]_{z}
wherein:
- z = 1 to 20,
- s = 0 to 25,
- Pa represents:
-[COA-COOB]ₜ-
where:
- t = 1 to 150, and
- A represents CH=CH or CH₂-CH₂
- B represents (CH₂)ₙ -O- where n = 1 to 8,
Pb represents -[COO]-ₓ where x = 0 or 1,
Pd represents:
-[COO]_{y}-
where y = 0 or 1
provided that if s = 0 or x = 0 then y = 1, and if y = 0 then s ≠ 0 and x = 1;
- Pc and Pe, each independently of one another, represent:
[RO]ᵤ
where:
- u = 0 to 150, and
- R represents an alkylidene, cycloalkylidene, alkenylene, alkynylene or arylidene group, optionally substituted,
Pa' represents -[COA-COOB']-_{t'}
where A has the same meaning as above
B' represents (CH₂)_{n'}O, where n' = 0 to 8
or [RO]ᵤ , R and u having the same meanings as above,
and t' = 0 to 150,
provided that if s = 0, t' = 0, x = 0 and u = 0 then B does not represent (CH₂)₄O if A is CH₂CH₂,
the weight-average molecular mass of the polymer being between 2,000 daltons and 300,000 daltons,
said polymer contains a polyfumarate block and is covalently linked to an active substance.

3. Product according to claim 2, **characterized by** the fact that the block polymer is directly linked to the active substance or is linked to the active substance via a polymeric or peptidic arm.

4. Product according to anyone of claims 1 to 3, **characterized by** the fact that the block polymer contains polyethyleneglycol blocks linked to polyester and/or polycarbonate blocks.

5. Product according to claim 4, **characterized by** the fact that the polyester blocks are selected from polyfumarate and polysuccinate blocks.

6. Process for the preparation of a product according to anyone of claims 1 to 5, **characterized by** the fact that blocks of polyesters are polymerised with blocks of polyethylene glycol, wherein carbonate groups are introduced into the polymer, and an active substance is added.

7. Process according to claim 6, **characterized by** the fact that blocks of polyesters are prepared by polycondensation of dicarboxylic acid with diols.

8. Process according to claim 6 or 7, **characterized by** the fact that the carbonate groups are introduced by converting the terminal hydroxyl groups of a monomer or of an oligomer with a bis-hydroxy end group to an activated derivative by reaction with a compound having the formula: 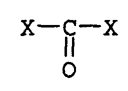 where X represents Cl or imidazole and by reacting said activated derivatives with hydroxyl compounds.

9. Use of a product according to anyone of claims 1 to 5 for preparing pharmaceutical compositions.

10. Use of a product according to anyone of claims 1 to 5 for preparing nanoparticles.

11. Use of a product according to anyone of claims 1 to 5 for preparing implants, microspheres or microparticles allowing the controlled release of the active substance.
